# EUROPÄISCHE PATENTSCHRIFT

(11) **EP 0 902 198 B1**
(45) Veröffentlichungstag und Bekanntmachung des Hinweises auf die Patenterteilung: **02.04.2003**
(21) Anmeldenummer: 98117188.7
(22) Anmeldetag: 10.09.1998
(51) Int. Cl.: F16B 21/07

(54) **Steckkupplung**
Plug connector
Connecteur à emboîtement

(30) Priorität: 12.09.1997 DE 19740165; 10.08.1998 DE 19836108
(43) Veröffentlichungstag der Anmeldung: 17.03.1999
(73) Patentinhaber: Böllhoff GmbH, 33649 Bielefeld (DE)
(72) Erfinder: Dembowsky, Hans-Joachim, 21035 Hamburg (DE); Fangmann, Herbert, 49393 Lohne (DE); Hauck, Peter, 96145 Sesslach (DE); Süssenbach, Rainer, 33803 Steinhagen (DE)
(74) Vertreter: Wehnert, Werner, Dipl.-Ing.

(56) Entgegenhaltungen:
- DE-A- 19 701 365
- US-A- 4 778 320
- US-A- 5 507 610
- US-A- 5 580 204

## Beschreibung

Die Erfindung betrifft eine Steckkupplung zum lösbaren Verbinden eines ersten Bauteils mit einem zweiten Bauteil gemäß dem Oberbegriff des Patentanspruchs 1.

Eine Steckkupplung dieser Bauart ist aus der US-A-5 580 204 bekannt. Bei dieser Steckkupplung besteht das Einsatzteil aus der Kugelpfanne, dem Einführkonus sowie einem am Einführkonus angeformten Flansch und ist unmittelbar in ein Loch des plattenförmig ausgebildeten ersten Bauteils eingesetzt. Das Einsatzteil ist mit axial verlaufenden Schlitzen versehen, die der Kugelpfanne und dem Einführkonus die zum Einschnappen und Lösen der Steckkupplung erforderliche Elastizität verleihen. Da das den kugelförmigen Kopf aufnehmende pfannenförmige Einsatzteil unmittelbar in einem Loch des ersten Bauteils sitzt und der Vorsprung mit dem kugelförmigen Kopf unmittelbar an dem zweiten Bauteil befestigt ist, dürfte die Steckkupplung nur eine begrenzte Schwingungsentkopplung zwischen den beiden Bauteilen ermöglichen, abgesehen davon, dass die längsverlaufenden Schlitze die Festigkeit des Einsatzteiles schwächen.

Der Erfindung liegt die Aufgabe zugrunde, eine Steckkupplung der im Oberbegriff des Anspruchs 1 angegebenen Gattung so weiterzubilden, dass sie eine möglichst gute Schwingungsentkopplung zwischen den beiden Bauteilen ermöglicht.

Die genannte Aufgabe ist erfindungsgemäß mit den Merkmalen des Patentanspruchs 1 gelöst. Vorteilhafte Weiterbildungen ergeben sich aus den Unteransprüchen.

Erfindungsgemäß besitzt das elastomere Einsatzteil schwingungsdämpfende Eigenschaften. Das Einsatzteil ist aus Gummi oder elastomerem Kunststoff hergestellt und ist verhältnismäßig weich und elastisch, also schwingungsdämpfend und verformbar zum Einsetzen in eine Fassung. Innerhalb des Einsatzteils liegt die Kugelpfanne, in welche der Kugelkopf am anderen Bauteil eintreten kann. Der Querschnitt des Einsatzteils ist so gewählt, dass zusammen mit dem gummielastischen Werkstoff hohe schwingungsdämpfende Eigenschaften erzielt werden, somit zur Entkopplung von Schwingungen dient. Hierzu sind auch Aussteifungen vorgesehen.

Andererseits ist das gummielastische Einsatzteil in einer Fassung formschlüssig gehalten. Damit ist ein sicherer Sitz erzielt und kann die Steckkupplung gelöst werden, ohne dass das Einsatzteil sich aus der Fassung löst. Die Befestigung in der Fassung kann durch queraxiales Einschieben des Einsatzteiles in einen seitlich offenen Schuh, also in Richtung quer zur Längsachse der Steckkupplung, oder durch axiales Einschieben des Einsatzteiles, also in Richtung der Längsachse, erfolgen.

Erfindungsgemäß ist so in einfacher Weise eine sichere Steckverbindung zwischen zwei Bauteilen geschaffen, die rüttelsicher ist, Schwingungen dämpft und einfach zu montieren ist. Außerdem läßt sich die Steckkupplung ohne Schwierigkeiten auf der Unterseite eines aufzusteckenden Bauteils anbringen. Damit erfolgt die Befestigung von unten her, so daß sich eine geschlossene Oberfläche ergibt, wie sie beispielsweise bei Abdeckungen von Motoren gewünscht wird.

Zwei Ausführungsbeispiele der Erfindung werden nachstehend anhand der Zeichnung näher erläutert. Es zeigt:
Fig. 1 einen Seitenschnitt einer an einer Abdeckhaube angeformten Fassung,
Fig. 2 eine Draufsicht auf den Boden der Fassung längs der Linie 2-2 in Fig. 1,
Fig. 3 eine Ansicht des oberen Halteflansches längs der Linie 3-3 in Fig. 1,
Fig. 4 einen Schnitt des elastomeren Einsatzteils,
Fig. 5 eine Draufsicht auf das Einsatzteil der Fig. 4,
Fig. 6 eine Ansicht des Einsatzteils von unten und
Fig. 7 einen Schnitt durch die Steckkupplung im Eingriff.
Fig. 8 einen der Fig. 1 entsprechenden Seitenschnitt der Fassung einer abgewandelten Ausführungsform der Steckkupplung,
Fig. 9 einen der Fig. 4 entsprechenden Schnitt des abgewandelten Einsatzteiles,
Fig. 10 eine Draufsicht auf die Fassung der Fig. 8 von unten,
Fig. 11 eine der Fig. 5 entsprechende Ansicht auf das abgewandelte Einsatzteil der Fig. 9,
Fig. 12 einen der Fig. 7 entsprechenden Schnitt durch die abgewandelte Ausführungsform der Steckkupplung.

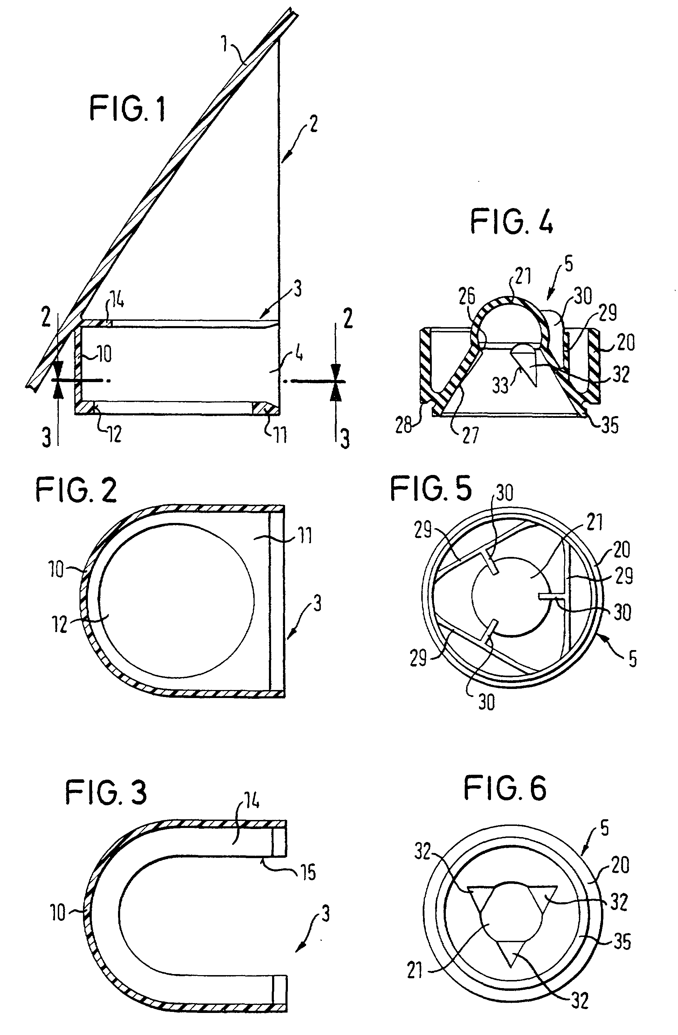

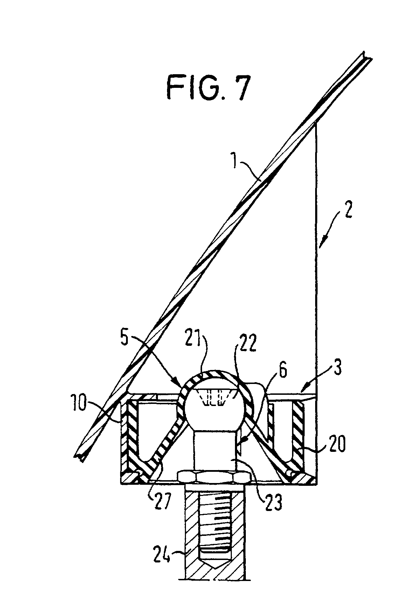

In Fig. 1 sind Teile einer Abdeckhaube 1 dargestellt, insbesondere der Rand einer im übrigen nicht dargestellten Abdeckhaube, an deren Unterseite ein Dom 2 angeformt ist, der im unteren Teil als Fassung 3 in Form eines Schuhs ausgebildet ist. Die Fassung 3 weist eine seitliche Öffnung 4 auf, durch die ein elastomeres Einsatzteil 5 einschiebbar ist, das in Fig. 4 dargestellt ist. Fig. 7 zeigt das elastomere Einsatzteil 5, das in dem Schuh 3 einsitzt, in Schnappverbindung mit einem Kugelbolzen 6. Dies wird im folgenden näher erläutert.

Aus den Fign. 1 bis 3 geht im einzelnen die Fassung 3 hervor, die aus einer Umfangswand 10 besteht, einem Bodenflansch 11, in dem eine kreisrunde Öffnung 12 vorgesehen ist, und einem oberen Flansch 14, der gemäß Fig. 3 seitlich bei 15 offen ist. Die Haube 1 mit dem Dom 2 und der Fassung 3 besteht aus Kunststoff und ist einstückig hergestellt. Seitlich besitzt die Fassung 3 eine Öffnung 4, in welche das in den Fign. 4 bis 6 dargestellte elastomere Einsatzteil einschiebbar ist.

Das Einsatzteil 5 weist eine zylindrische Außenwand 20 auf, dessen Höhe dem Innenabstand zwischen dem Bodenflansch 11 und dem oberen Flansch 14 entspricht. Innerhalb der zylindrischen Wand 20 ist eine Kugelpfanne 21 ausgebildet, die zur Aufnahme des aus Fig. 7 ersichtlichen Kugelkopfes 22 an einem Bolzen 23 dient, der in einem Gehäuse 24 eingeschraubt ist, auf das das Bauteil 1 aufgesteckt werden soll. Anstelle der Schraubverbindung des Bolzens 23 kann dieser auch mit einem selbstfurchenden Gewinde oder seinerseits mit einer Schraube im Gehäuse 24 befestigt sein. Bei 26 weist die Kugelpfanne 21 einen Hinterschnitt auf und über einen Einführtrichter 27 ist die Kugelpfanne 21 mit dem unteren Rand 28 der zylindrischen Wand 20 elastisch verbunden. So rühren die schwingungsdämpfenden Eigenschaften im wesentlichen von den elastomeren Eigenschaften und von der Elastizität des Einführkonus 27 zwischen der Außenwand 20, der Kugelpfanne 21 und Aussteifungen her, die nachstehend beschrieben sind.

Zur zusätzlichen Abstützung der Kugelpfanne 21 dienen aussteifende, sehnenartig verlaufende Stege 29, wie sie aus der Draufsicht der Fig. 5 deutlich zu entnehmen sind, und die an der Außenwand 20 angeformt sind. Mittig sind die Stege 29 mit je einer radialen Rippe 30 versehen, die an der Außenseite der Kugelpfanne 21 angeformt ist und so eine radiale Abstützung herbeiführt. In Fig. 5 sind drei Stege 29 mit je einer Rippe 30 vorgesehen. Diese Aussteifungen wirken in allen Richtungen schwingungsdämpfend.

Ferner ist im Bereich des Hinterschnittes 26 der Kugelpfanne 21 eine Reihe von Nasen 32 an der Innenseite des Einführkonus 27 angeformt. An den schrägen Rampen 33 der Nasen gleitet der Kugelkopf 22 beim Einstecken entlang, so daß die Nasen 32 nachgeben und der Kopf 22 in die Kugelpfanne 21 eintritt, in der er von der Oberseite der Nasen 32 gehalten wird. Die Nasen 32 sind in Fig. 6 erkennbar. Ferner ist in Verlängerung des Einführkonus 27 ein unterer Rand 35 angeformt.

Beim Zusammenbau der Steckkupplung wird das elastomere Einsatzteil 5 seitlich durch die Öffnung 4 in die Fassung 3 eingeschoben, indem sich das hochelastische Einsatzteil 5 so weit von Hand verformen läßt, daß der untere Rand 35 in die Öffnung 12 des Bodenflansches 11 eintritt. So läßt sich das Einsatzteil leicht einsetzen, im eingebauten Zustand weist das Einsatzteil hohe Haltekräfte in axialer Richtung auf. In Längsrichtung der Steckkupplung ist das Einsatzteil 5 vom oberen Flansch 14 und dem Bodenflansch 11 gehalten. In seitlicher Richtung schmiegt sich die zylindrische Außenwand 20 an die halbzylindrische Umfangswand 10 der Fassung, so daß die elastische Umfangswand 20 ausreichend abgestützt ist.

Fig. 7 zeigt den zusammengebauten Zustand, wenn das Bauteil 1 mit dem elastischen Einsatzteil 3 auf den Kugelbolzen 6 aufgesteckt ist. Die Steckkupplung ist schwingungs- und geräuschdämpfend, rüttelsicher und läßt sich leicht und einfach montieren, so daß insbesondere Verschraubungen an dem zu befestigenden Bauteil 1 vermieden sind und dieses eine glatte Oberseite aufweist.

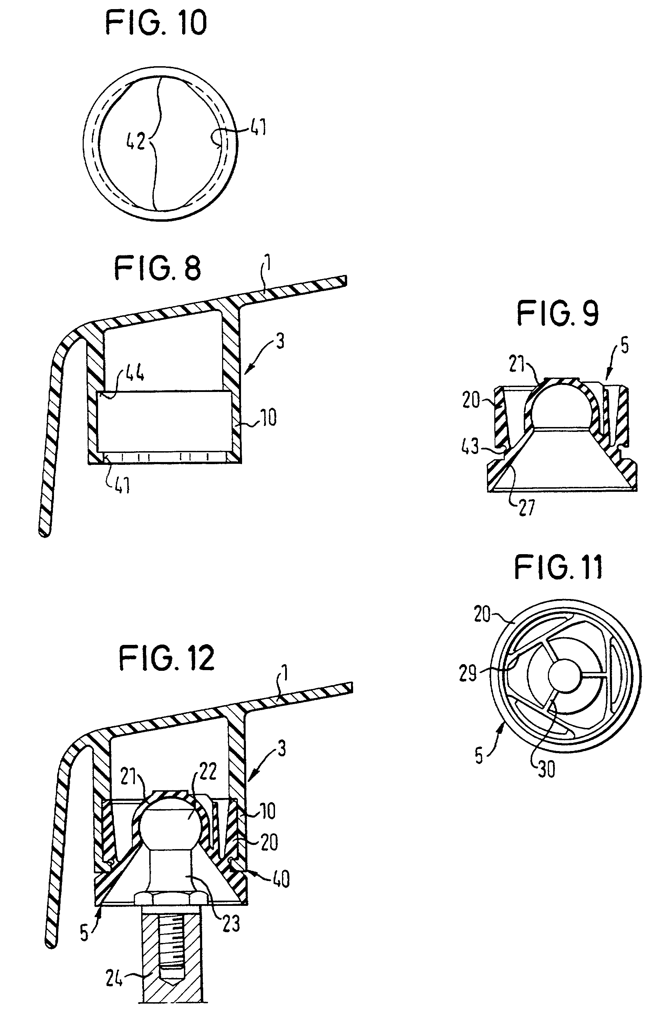

Die Fign. 8 bis 12 zeigen ein abgewandeltes Ausführungsbeispiel der Steckkupplung. Die sich entsprechenden Ein-zelteile der beiden Ausführungsbeispiele wurden mit den gleichen Bezugszeichen versehen, und die Beschreibung des zweiten Ausführungsbeispieles beschränkt sich auf die bezüglich des ersten Ausführungsbeispiels unterschiedliche Gestaltung.

Der wesentliche Unterschied zwischen den beiden Ausführungsbeispielen besteht darin, daß das Einsatzteil 5 bei dem zweiten Ausführungsbeispiel nicht in seitlicher Richtung, sondern in axialer Richtung in die Fassung 3 eingeschoben wird und der Formschluß zwischen Fassung und Einsatzteil durch eine beim Einschieben einschnappende Rastverbindung 40 erfolgt (s. Fig. 12).

Zu diesem Zweck besitzt die Fassung 3 eine an dem Bauteil 1 einstückig angeformte zylindrische Wandung 10, die an ihrem (in Fig. 8 unteren) offenen Ende mit einem radial einwärts ragenden Umfangsrand 41 versehen ist. Der Umfangsrand 41 ist in zwei diametral gegenüberliegenden Bereichen 42 unterbrochen, wie in Fig. 10 zu sehen ist.

Das Einsatzteil 5 ist in dem Bereich, in dem die kreiszylindrische Wand 20 in den Einführkonus 27 übergeht, mit einer Ringnut 43 versehen, welche zusammen mit dem Umfangsrand 41 die Rastverbindung 40 bildet.

Das Einsatzteil 5 ist elastisch so verformbar, daß es manuell, d.h. mit dem Daumen und einem weiteren Finger einer Hand, radial so weit zusammengedrückt werden kann, daß das Einsatzteil 5 axial in die Fassung 3 einschiebbar ist. Die zylindrische Wand 10 der Fassung 3 ist auf der Innenseite etwas ausgespart, so daß eine Schulter 44 (s. Fig. 8) entsteht, an die sich die zylindrische Wand 20 des Einsatzteiles 5 beim axialen Einschieben anlegt. Der Umfangsrand 41 schnappt dann in die Ringnut 43 ein, so daß das Einsatzteil 5 durch die Rastverbindung 40 formschlüssig in der Fassung 3 gehalten ist.

## Patentansprüche

1. Steckkupplung zum Verbinden eines ersten Bauteils (1) mit einem zweiten Bauteil (24), bestehend aus
einem elastomeren, verformbaren Einsatzteil (5), das in eine an dem ersten Bauteil (1) vorgesehene Fassung (3) einsetzbar und in der Fassung formschlüssig gehalten ist und das eine Kugelpfanne (21) mit einem daran angeformten Einführkonus (27) aufweist, und
einem mit einem kugelförmigen Kopf (22) versehenen Vorsprung (6), der an dem zweiten Bauteil (24) befestigt ist und mit dem kugelförmigen Kopf (22) in die Kugelpfanne (21) des Einsatzteiles (5) in Schnappverbindung einsetzbar ist,
**dadurch gekennzeichnet, dass** das Einsatzteil (5) eine zylindrische Außenwand (20) aufweist, die an dem Einführkonus (27) angeformt ist und den Einführkonus (27) sowie einen Teil der Kugelpfanne (21) unter Freilassung eines Zwischenraumes umgibt und die in Anlage an eine Wand (10) der Fassung (3) schiebbar ist.

2. Steckkupplung nach Anspruch 1, **dadurch gekennzeichnet, dass** an dem Einsatzteil (5) Aussteifungen (29, 30) vorgesehen sind.

3. Steckkupplung nach Anspruch 2, **dadurch gekennzeichnet, dass** in dem Zwischenraum zwischen der zylindrischen Außenwand (20) und der Kugelpfanne (21) sehnenförmige Stege (29) mit radialen Rippen (30) als Aussteifungen angeordnet sind, an denen sich die Kugelpfanne (21) abstützt und die in allen Richtungen schwingungsdämpfend sind.

4. Steckkupplung nach einem der Ansprüche 1 bis 3, **dadurch gekennzeichnet, dass** am Einführkonus (27) mehrere Nasen (32) angeformt sind, die beim Aufstecken der Kugelpfanne (21) auf den kugelförmigen Kopf (22) elastisch ausweichen und die Fassung (3) gegen Abheben sichern.

5. Steckkupplung nach einem der Ansprüche 1 bis 4, **dadurch gekennzeichnet, dass** die Kugelpfanne (21) einen Hinterschnitt (26) aufweist.

6. Steckkupplung nach einem der Ansprüche 1 bis 5, **dadurch gekennzeichnet, dass** das Einsatzteil (5) mit einem Rand (35) versehen ist, der in eine kreisrunde Öffnung (12) in einem Bodenflansch (11) der Fassung (3) greift.

7. Steckkupplung nach einem der Ansprüche 1 bis 6, **dadurch gekennzeichnet, dass** das Einsatzteil (5) einstückig aus elastomerem Kunstoff oder Gummi hergestellt ist.

8. Steckkupplung nach einem der Ansprüche 1 bis 7, **dadurch gekennzeichnet, dass** das Einsatzteil (5) so ausgebildet ist, dass es seitlich in die Fassung (3) einschiebbar ist.

9. Steckkupplung nach Anspruch 8, **dadurch gekennzeichnet, dass** das Einsatzteil (5) in der Fassung (3) in Längsrichtung der Steckverbindung an oberen und unteren Flanschen (11, 14) gehalten ist.

10. Steckkupplung nach einem der Ansprüche 1 bis 7, **dadurch gekennzeichnet, dass** das Einsatzteil (5) so ausgebildet ist, dass es axial in die Fassung (3) einschiebbar ist.

11. Steckkupplung nach Anspruch 10, **dadurch gekennzeichnet, dass** das Einsatzteil (5) durch eine beim axialen Einschieben einschnappende Rastverbindung (40) in der Fassung (3) formschlüssig gehalten ist.

12. Steckkupplung nach Anspruch 10 oder 11, **dadurch gekennzeichnet, dass** das Einsatzteil (5) ein Ringnut (43) hat, in die ein radial einwärts ragender Umfangsrand (41) an der Wand (10) der Fassung (3) einschnappbar ist.

## Claims

1. A plug-in coupling for coupling a first member (1) and a second member (24), comprising
an elastomeric, deformable insert member (5) which is insertable into a socket (3) provided at the first member (1) and positively retained within the socket and which comprises a ball-shaped cup (21) integral with a conical guide portion (27), and
a projection (6) provided with a ball-shaped head (22), said projection being fixed to the second member (24) and being adapted to have its ball-shaped head (22) inserted into the ball-shaped cup (21) of the insert member (5),
**characterized in that** the insert member (5) has a cylindrical outer wall (20) which is integral with the conical guide portion (27) and surrounds the conical guide portion (27) and a part of the ball-shaped cup (21) while leaving a gap therebetween and which is adapted to be displaced into engagement with a wall (10) of the socket (3).

2. A plug-in coupling according to claim 1 **characterized in that** the insert member (5) is provided with stiffening means (29, 30).

3. A plug-in coupling according to claim 2 **characterized in that** cordal webs (29) with radial ribs (30) are provided in the gap between the cylindrical outer wall (20) and the ball-shaped cup (21) to provide stiffening means by which the ball-shaped cup (21) is supported and which dampen vibrations in all directions.

4. A plug-in coupling according to any of claims 1 to 3 **characterized in that** the conical guide portion (27) includes a plurality of noses (32) which are resiliently deflected when the ball-shaped cup (21) is snapped upon the ball-shaped head (22) so as to prevent the socket (3) from being released.

5. A plug-in coupling according to any of claims 1 to 4 **characterized in that** the ball-shaped cup (21) is provided with an undercut (26).

6. A plug-in coupling according to any of claims 1 to 5 **characterized in that** the insert member (5) is provided with a rim (35) engaged within a circular opening (12) in a bottom flange (11) of the socket (3).

7. A plug-in coupling according to any of claims 1 to 6 **characterized in that** the insert member (5) is integrally formed from an elastomeric plastic material or rubber.

8. A plug-in coupling as defined in any of claims 1 to 7 **characterized in that** the insert member (5) is arranged so as to be insertable laterally into the socket (3).

9. A plug-in coupling according to claim 8 **characterized in that** the insert member (5) is retained within the socket (3) by upper and lower flanges (11, 14) in a longitudinal direction of the plug-in coupling.

10. A plug-in coupling according to any of claims 1 to 7, **characterized in that** the insert member (5) is arranged so as to be insertable axially into the socket (3).

11. A plug-in coupling according to claim 10 **characterized in that** the insert member (5) is positively retained in the socket (3) by a snap-in connection (40) adapted to snap in when the insert member (5) is axially inserted into the socket.

12. A plug-in coupling according to claim 10 or claim 11 **characterized in that** the insert member (5) has an annular groove (43) adapted to snappingly receive a radially inwards extending circumferential rim (41) at the wall (10) of the socket (3).

## Revendications

1. Dispositif d'accouplement par emboîtement destiné à relier un premier élément de construction (1) à un second élément de construction (24), composé de :
une pièce rapportée déformable (5) en élastomère, qui peut être insérée dans un châssis (3) prévu sur le premier élément de construction (1) et est maintenue mécaniquement dans le châssis et qui comporte un coussinet sphérique (21) pourvu d'un cône d'introduction (27) formé sur celle-ci, et
une protubérance (6) pourvue d'une tête sphérique (22), qui est fixée à la seconde pièce de construction (24) et qui peut être insérée au moyen de la tête sphérique (22) dans le coussinet sphérique (21) de la pièce rapportée (5) par encliquetage,
**caractérisé en ce que** la pièce rapportée (5) comporte une paroi extérieure cylindrique (20) formée sur le cône d'introduction (27) et entourant le cône d'introduction (27) ainsi qu'une partie du coussinet sphérique (21) en laissant libre un espace intermédiaire et pouvant coulisser en s'appuyant sur une paroi (10) du châssis (3).

2. Dispositif d'accouplement par emboîtement selon la revendication 1, **caractérisé en ce que** des renforts (29, 30) sont prévus sur la pièce rapportée (5).

3. Dispositif d'accouplement par emboîtement selon la revendication 2, **caractérisé en ce que**, dans l'espace intermédiaire entre la paroi extérieure cylindrique (20) et le coussinet sphérique (21), sont disposées des entretoises sous forme de tendons (29) pourvues de nervures radiales comme renforts, sur lesquels s'appuie le coussinet sphérique (21) et qui amortissent les vibrations dans toutes les directions.

4. Dispositif d'accouplement par emboîtement selon l'une des revendications 1 à 3, **caractérisé en ce que** sur le cône d'introduction (27) sont formés plusieurs nez (32) qui, lors de l'emboîtement du coussinet sphérique (21) sur la tête sphérique (22), dévient élastiquement et évitent l'enlèvement du châssis.

5. Dispositif d'accouplement par emboîtement selon l'une des revendications 1 à 4, **caractérisé en ce que** le coussinet sphérique (21) comporte une dépouille (26).

6. Dispositif d'accouplement par emboîtement selon l'une des revendications 1 à 5, **caractérisé en ce que** la pièce rapportée (5) est pourvue d'un bord (35) qui pénètre dans une ouverture circulaire (12) dans une collerette de fond (11) du châssis.

7. Dispositif d'accouplement par emboîtement selon l'une des revendications 1 à 6, **caractérisé en ce que** la pièce rapportée (5) est faite d'une seule pièce en matière synthétique ou en caoutchouc.

8. Dispositif d'accouplement par emboîtement selon l'une des revendications 1 à 7, **caractérisé en ce que** la pièce rapportée (5) est conçue de manière à pouvoir être introduite latéralement dans le châssis (3).

9. Dispositif d'accouplement par emboîtement selon la revendication 8, **caractérisé en ce que** la pièce rapportée (5) est maintenue dans le châssis (3) dans la direction longitudinale de l'accouplement par emboîtement à des collerettes supérieure et inférieure (11, 14).

10. Dispositif d'accouplement par emboîtement selon l'une quelconque des revendications 1 à 7, **caractérisé en ce que** la pièce rapportée (5) est conçue de manière à pouvoir être introduite axialement dans le châssis (3).

11. Dispositif d'accouplement par emboîtement selon la revendication 10, **caractérisé en ce que** la pièce rapportée (5) est maintenue mécaniquement dans le châssis (3) par une liaison à encoches (40) s'encliquetant lors de l'introduction axiale.

12. Dispositif d'accouplement par emboîtement selon la revendication 10 ou 11, **caractérisé en ce que** la pièce rapportée (5) comporte une rainure annulaire (43), dans laquelle un bord périphérique faisant saillie radialement vers l'intérieur peut être encliqueté à la paroi (10) du châssis (3).
